# EUROPÄISCHE PATENTSCHRIFT

(11) **EP 1 561 185 B1**
(45) Veröffentlichungstag und Bekanntmachung des Hinweises auf die Patenterteilung: **15.03.2006**
(21) Anmeldenummer: 03769415.5
(22) Anmeldetag: 17.10.2003
(51) Int. Cl.: G06T 15/20, G06T 15/60, G06T 15/50

(54) **VERFAHREN ZUR DARSTELLUNG EINES IN EINEM VOLUMENDATENSATZ ABGEBILDETEN OBJEKTES**
METHOD FOR DEPICTING AN OBJECT DISPLAYED IN A VOLUME DATA SET
PROCEDE POUR PRODUIRE UNE IMAGE D'UN OBJET REPRESENTE DANS UN ENSEMBLE DE DONNEES DE VOLUMES

(30) Priorität: 15.11.2002 DE 10253617
(43) Veröffentlichungstag der Anmeldung: 10.08.2005
(73) Patentinhaber: SIEMENS AKTIENGESELLSCHAFT, 80333 München (DE)
(72) Erfinder: BARTH, Karl, 91315 Höchstadt (DE)
(86) Internationale Anmeldenummer: PCT/EP2003/011552
(87) Internationale Veröffentlichungsnummer: WO 2004/047028

(56) Entgegenhaltungen:
- EP-A- 1 001 379
- EP-A- 1 054 349
- EP-A- 1 056 049
- WO-A-02/50779
- EBERT D ET AL: "Volume illustration: non-photorealistic rendering of volume models" PROCEEDINGS VISUALIZATION 2000. VIS 2000. SALT LAKE CITY, UT, OCT. 8 - 13, 2000, ANNUAL IEEE CONFERENCE ON VISUALIZATION, LOS ALAMITOS, CA: IEEE COMP. SOC, US, 8. Oktober 2000 (2000-10-08), Seiten 195-201, XP010524603 ISBN: 0-7803-6478-3

## Beschreibung

Die Erfindung betrifft ein Verfahren zur Darstellung eines in einem Volumendatensatz abgebildeten Objektes.

Insbesondere mit modernen bildgebenden medizintechnischen Geräten aufgenommene Bilder weisen eine relativ hohe Auflösung auf, so dass mit ihnen verstärkt 3D-Aufnahmen (Volumendatensätze) erstellt werden. Bildgebende medizintechnische Geräte sind z.B. Ultraschall-, Computertomographie-, Magnetresonanz- oder Röntgengeräte oder PET-Scanner. Ferner können öfter Computertomographie- (CT) oder Röntgengeräte eingesetzt werden, da sich eine Strahlenbelastung, die ein Lebewesen während einer Untersuchung mit einem dieser Geräte ausgesetzt ist, verringert hat. Volumendatensätze weisen jedoch eine größere Datenmenge auf als Bilddatensätze von herkömmlichen zweidimensionalen Bildern, weshalb eine Auswertung von Volumendatensätzen relativ zeitaufwändig ist. Die eigentliche Aufnahme der Volumendatensätze dauert zur Zeit in etwa eine halbe Minute, wogegen man für das Durchforsten und Aufbereiten des Volumendatensatzes oft eine halbe Stunde oder mehr benötigt. Daher sind automatische Erkennungs- und Aufbereitungsverfahren notwendig und willkommen.

Bis etwa zum Jahr 2000 war es in der Computertomographie (CT) fast nur üblich, eine Diagnose anhand axialer Schichtstapel (Schnittbilder) zu treffen oder sich zumindest für einen Befund vorwiegend an den Schnittbildern zu orientieren. Seit etwa 1995 sind dank der Rechenleistung von Computern 3D-Darstellungen auf Befundungskonsolen verbreitet; sie hatten aber zuerst eher wissenschaftliche oder ergänzende Bedeutung. Um dem Arzt eine Diagnose zu erleichtern, sind ferner im Wesentlichen vier Grundverfahren der 3D-Visualisierung entwickelt worden:
1. Multiplanare Reformatierung (MPR): Dies ist nichts anderes als eine Neuzusammenstellung des Volumendatensatzes in anderer Orientierung als z.B. den ursprünglichen horizontalen Schichten. Es wird insbesondere zwischen der orthogonalen MPR (3 MPRs, jeweils senkrecht zu einer der ursprünglichen Koordinatenachsen), der freien MPR (schräge Schichten; abgeleitet = interpoliert) und der Curved MPR (Schichterstellung parallel zu einem beliebigen Pfad durch das Abbild des Körpers des Lebewesens und z.B. senkrecht zu der MPR, in welcher der Pfad gezeichnet wurde) unterschieden.
2. Shaded Surface Display (SSD): Segmentierung des Volumendatensatzes und Darstellung der Oberfläche der herausgeschnittenen Objekte, meist stark geprägt durch Orientierung an den Grauwerten der Abbildung (z.B. CT-Werten) und manuelles Hilfs-Editing.
3. Maximal Intensity Projection (MIP): Darstellung der höchsten Intensität entlang jedes Sehstrahls. Bei der so genannten Thin MIP wird nur ein Teilvolumen dargestellt.
4. Volume Rendering(VR): Darunter wird eine Modellierung anhand von Sehstrahlen, die vergleichbar mit Röntgenstrahlen in das Objekt eindringen oder aus dem Objekt austreten, verstanden. Dadurch wird die gesamte Tiefe des abgebildeten Körpers (teilweise durchscheinend) erfasst; es gehen jedoch Einzelheiten von kleinen und vor Allem dünnschichtig dargestellten Objekten verloren. Die Darstellung wird manuell durch Einstellung so genannter Transferfunktionen (Farb-Lookup-Tabellen) geprägt. Beleuchtungseffekte können hinzugemischt werden, indem weitere Speicherebenen verwendet werden, in denen Gradientenbeitrag und Richtung für die Beleuchtung abgespeichert und bei der Darstellung eingerechnet werden.

Ein Nachteil der bekannten Verfahren ist jedoch die unzureichende Darstellung relativ feiner Strukturen, insbesondere wenn ein relativ großer Volumendatensatz vorliegt. Ein weiterer Nachteil der bekannten Verfahren ist, dass jeweils nur der gesamte 3D-Block in festem Zusammenhang dargestellt wird.

Die Aufgabe der Erfindung ist es daher, ein Verfahren anzugeben, mit dem auch relativ feine, insbesondere in einem relativ großen Volumendatensatz abgebildete Strukturen verbessert dargestellt werden.

Die Aufgabe der Erfindung wird gelöst durch ein Verfahren zur Darstellung eines in einem ersten Volumendatensatz abgebildeten Objektes gemäß Anspruch 1, aufweisend folgende Verfahrensschritte:
- Herstellen eines zweiten Volumendatensatzes, indem alle Volumenelemente des ersten Volumendatensatzes parallel zu der in den ersten Volumendatensatz hineinlaufenden Hauptbetrachtungsrichtung tiefenabhängig moduliert und/oder codiert werden, und
- Anwenden des Volume Renderings auf den zweiten Volumendatensatz.

Ziel und Gegenstand des erfindungsgemäßen Verfahrens ist es, ohne spezielle Segmentierung des im ersten Volumendatensatz abgebildeten Objektes durch eine Weiterentwicklung des Volume Renderings eine kontinuierliche 3D-Darstellung durch die ganze Tiefe des abgebildeten Objektes zu erreichen. Der erste Volumendatensatz wird z.B. mit einem Computertomographen oder einem Magnetresonanzgerät, allgemein mit einem bildgebenden Gerät, das zur Herstellung eines Volumendatensatzes geeignet ist, hergestellt.

Zusätzlich wird erfindungsgemäß durch eine Tiefenschattierung gleichzeitig ein räumlicher und plastischer Eindruck des abgebildeten Objektes erzielt. Dazu wird erfindungsgemäß der zweite Volumendatensatz aus dem ersten Volumendatensatz hergestellt, indem vorzugsweise alle Volumenelemente (bei CT z.B. in Hounsfield-Einheiten) des ersten Volumendatensatzes in Richtung der Hauptbetrachtungsrichtung tiefenabhängig moduliert bzw. codiert und abgespeichert werden und auf den zweiten Volumendatensatz das bekannte Volume Rendering angewendet wird. Das Volume Rendering ist beispielsweise in Foley et al., "Computer Graphics: Principle and Practice, 2. Auflage, Addison-Wesley, 1990, Seiten 1034 bis 1039 beschrieben. So wird z.B. in Zusammenwirkung mit dem so genannten Alpha-Blending einerseits im Sinne einer Tiefenschattierung der plastische 3D-Eindruck verbessert.

Der Alpha-Wert bestimmt die Transparenz bzw. Opazität der dargestellten Objekte und wird für jeden möglichen Wert der Volumendaten definiert. Andererseits ergibt sich eine kontinuierliche Auswahlmöglichkeit für den jeweils dargestellten Tiefenbereich. Dies ist nicht trivial, da z.B. in der Computertomographie ein breites Spektrum von Messwerten vorliegt. Es handelt sich bei dem abgebildeten Objekt beispielsweise um einen Körper eines Lebewesens. Eine bestimmte Dichte von Kontrastmittel oder Knochen (Wirbelsäule) weiter hinten im abgebildeten Körper des Lebewesens mit stark opaque eingestelltem Alpha leuchtet bezüglich einer Blickrichtung (Sehstrahl) eines Betrachters immer noch nach vorne durch, wenn davor liegende Objekte sich entlang des Sehstrahls nur begrenzt ausdehnen und ein wenig opaque (= transparent) eingestelltes Alpha aufweisen. Dieser Widerspruch lässt sich mit herkömmlichem Volumenrendern nicht auflösen. In einer Verdeckungslinie (entlang des Sehstrahls) kann eigentlich immer nur ein Objekt völlig klar dargestellt werden, und ein Umschalten auf die Darstellung anderer Objekte bedeutet Aufwand und starke Veränderung des Bildeindrucks.

Das erfindungsgemäße Verfahren bietet nun die Möglichkeit, durch Tiefenauswahl insbesondere in Echtzeit alle Teilobjekte (Organe) ohne Änderung des Gesamteindrucks mit vollem Kontrast und Tiefenschattierung darzustellen. Es wird dem Volumendatensatz sozusagen ein weiteres Alpha in der Hauptbetrachtungsrichtung aufgeprägt mit anderer Trägheit als dem exponentiellen Abklingen des Alpha-Blendung und abgestimmt auf die Erhaltung der Dichtemodulation im ersten Volumendatensatz (bei CT z.B. in Hounsfield-Einheiten). Dies wird so angesetzt, dass sich lokal an den abgebildeten Teilobjekten eine Tiefenschattierung, also eine Schattenbildung an den Rändern von vorne nach hinten ergibt, wodurch alle Teilobjekte plastisch erscheinen.

Beispielsweise mit einem Schieberegler kann kontinuierlich eingestellt werden, welcher Tiefenbereich dargestellt werden soll, wobei der Schieberegler auf einen Teilbereich der Transferfunktion wirkt, der auf der Werteskala des modulierten bzw. codierten Volumendatensatzes verschoben wird. Dabei ist neu, dass die Aktualisierung der Darstellung insbesondere in Echtzeit erfolgen kann, weil die Volumendaten schon vorab in der geeigneten Modulation bzw. Codierung z.B. in einem. Displayspeicher, z.B. einer handelsüblichen Grafikkarte, abgelegt sind. Vergleichbar ist diese Einstellung auch mit der Einstellung der Tiefenschärfe bei der Fotographie. Gegenüber der fotographischen Tiefenschärfe besteht hier jedoch die Möglichkeit, den vorderen und hinteren Rand z.B. mit einer rechteckigen Transferfunktion wesentlich präziser zu definieren, was vor allem zum Betrachter hin wichtig ist, um Sichthindernisse vollständig wegzublenden.

Mit der codierten bzw. modulierten Ablage des Volumens in Form des zweiten Volumendatensatzes im Speicher einher geht die entsprechende Gestaltung der Transferfunktion, im einfachsten Fall beispielsweise als in Bezug auf den Betrachter nach hinten abfallende Rampenfunktion, wenn eine Tiefenschattierung von vorne nach hinten gewünscht ist oder, wie es nach einer Ausführungsform der Erfindung vorgesehen ist, in Form eines modifizierten Rechtecks oder Balkens, dessen abgeschrägte Oberkante nach hinten abfällt. Die Transferfunktion wird nach einer Variante des erfindungsgemäßen Verfahrens in einer Lookup-Tabelle abgelegt.

Statt eines Schiebereglers, einer Maus- oder sonstigen Steuerung kann die Tiefeneinstellung auch mittels eines Navigationssystems durchgeführt werden, wie es nach einer weiteren Variante des erfindungsgemäßen Verfahrens vorgesehen ist. In diesem Falle werden sowohl der Viewpoint und die Perspektive wie beim gewöhnlichen Volume-Rendering als auch die Auswahl der aktuell darzustellenden Volumendaten in Echtzeit vom Navigationssystem eingestellt. Dies ermöglicht ein "Fly-Through" durch alle Volumendaten eines an sich geschlossenen abgebildeten Objekts. Bisher bekannte Verfahren erlauben dies nur durch Selektion in den Daten (MIP- nur Maximalwerte, aber über das gesamte Volumen), durch Wahl eines speziellen Pfades durch Hohlräume verbunden mit Vorsegmentierung (eigentliches Fly-Through) oder durch aufwändige Vorberechnungen (Segmentierung, Kolorierung, eigentlich wieder eine Datenauswahl).

Eine weitere Verbesserung der Darstellung des abgebildeten Objektes vor allem in der Geschwindigkeit der Darstellung wird gemäß Ausführungsformen des erfindungsgemäßen Verfahrens erreicht, wenn zusätzlich ein so genanntes "texture mapping" insbesondere nach dem Shear-Warp Verfahren durchgeführt wird, die Volumenelemente des ersten und/oder zweiten Volumendatensatzes interpoliert werden, der erste und/oder zweite Volumendatensatz gefiltert werden und/oder das Ergebnis der Filterung des ersten und/oder das Ergebnis der Filterung des zweiten Volumendatensatzes zwischengespeichert werden.

Ein Ausführungsbeispiel ist exemplarisch in den beigefügten schematischen Zeichnungen dargestellt. Es zeigen:
- Figur 1: einen Computertomographen,
- Figur 2: einen mit dem Computertomographen aufgenommenen ersten Volumendatensatz mit einem virtuellen Sehstrahl,
- Figur 3: ein aus dem in der Figur 2 dargestellten Volumendatensatz hergestellter weiterer Volumendatensatz,
- Figur 4: eine grafische Darstellung einer Transferfunktion und
- Figur 5: eine mittels des erfindungsgemäßen Verfahrens hergestellte Darstellung.

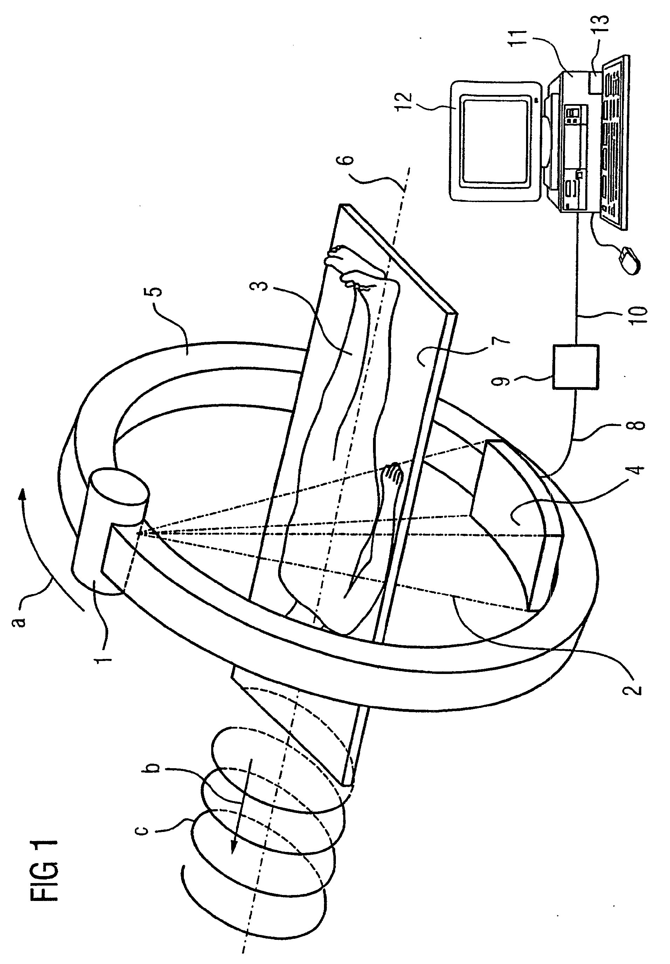

Die Figur 1 zeigt schematisch einen Computertomographen mit einer Röntgenstrahlenquelle 1, von dem ein pyramidenförmiges Röntgenstrahlenbündel 2, dessen Randstrahlen in der Figur 1 strichpunktiert dargestellt sind, ausgeht, das ein Untersuchungsobjekt, beispielsweise einen Patienten 3, durchsetzt und auf einen Strahlungsdetektor 4 trifft. Die Röntgenstrahlenquelle 1 und der Strahlungsdetektor 4 sind im Falle des vorliegenden Ausführungsbeispieles an einer ringförmigen Gantry 5 einander gegenüberliegend angeordnet. Die Gantry 5 ist bezüglich einer Systemachse 6, welche durch den Mittelpunkt der ringförmigen Gantry 5 verläuft, an einer in der Figur 1 nicht dargestellten Halterungsvorrichtung drehbar gelagert (vgl. Pfeil a).

Der Patient 3 liegt im Falle des vorliegenden Ausführungsbeispieles auf einem für Röntgenstrahlung transparenten Tisch 7, welcher mittels einer in der Figur 1 ebenfalls nicht dargestellten Tragevorrichtung längs der Systemachse 6 verschiebbar gelagert ist (vgl. Pfeil b).

Die Röntgenstrahlenquelle 1 und der Strahlungsdetektor 4 bilden somit ein Messsystem, das bezüglich der Systemachse 6 drehbar und entlang der Systemachse 6 relativ zum Patienten 3 verschiebbar ist, so dass der Patient 3 unter verschiedenen Projektionswinkeln und verschiedenen Positionen bezüglich der Systemachse 6 durchstrahlt werden kann. Aus den dabei auftretenden Ausgangssignalen des Strahlungsdetektors 4 bildet ein Datenerfassungssystem 9 Messwerte, die einem Rechner 11 zugeführt werden, der mittels dem Fachmann bekannten Verfahren ein Bild des Patienten 3 berechnet, das wiederum auf einem mit dem Rechner 11 verbundenen Monitor 12 wiedergegeben werden kann. Im Falle des vorliegenden Ausführungsbeispiels ist das Datenerfassungssystem 9 mit einer elektrischen Leitung 8, die in nicht dargestellter Weise beispielsweise ein Schleifringsystem oder eine drahtlose Übertragungsstrecke enthält, mit dem Strahlungsdetektor 4 und mit einer elektrischen Leitung 10 mit dem Rechner 11 verbunden.

Der in der Figur 1 gezeigte Computertomograph kann sowohl zur Sequenzabtastung als auch zur Spiralabtastung eingesetzt werden.

Bei der Sequenzabtastung erfolgt eine schichtweise Abtastung des Patienten 3. Dabei wird die Röntgenstrahlenquelle 1 und der Strahlungsdetektor 4 bezüglich der Systemachse 6 um den Patienten 3 gedreht und das die Röntgenstrahlenquelle 1 und den Strahlungsdetektor 4 umfassende Messsystem nimmt eine Vielzahl von Projektionen auf, um eine zweidimensionale Schicht des Patienten 3 abzutasten. Aus den dabei gewonnen Messwerten wird ein die abgetastete Schicht darstellendes Schnittbild rekonstruiert. Zwischen der Abtastung aufeinanderfolgender Schichten wird der Patient 3 jeweils entlang der Systemachse 6 bewegt. Dieser Vorgang wiederholt sich so lange, bis alle interessierenden Schichten erfasst sind.

Während der Spiralabtastung dreht sich das die Röntgenstrahlenquelle 1 und den Strahlungsdetektor 4 umfassende Messsystem bezüglich der Systemachse 6 und der Tisch 7 bewegt sich kontinuierlich in Richtung des Pfeils b, d.h. das die Röntgenstrahlenquelle 1 und den Strahlungsdetektor 4 umfassende Messsystem bewegt sich relativ zum Patienten 3 kontinuierlich auf einer Spiralbahn c, so lange, bis der interessierende Bereich des Patienten 3 vollständig erfasst ist. Dabei wird ein Volumendatensatz generiert, der im Falle des vorliegenden Ausführungsbeispiels nach dem in der Medizintechnik üblichen DICOM-Standard codiert ist.

Im Falle des vorliegenden Ausführungsbeispiels wird mit dem in der Figur 1 dargestellten Computertomographen ein aus mehreren aufeinanderfolgenden Schnittbildern bestehender Volumendatensatz des Bauchraums des Patienten 3 mit ca. 500 CT-Schichten (Schnittbilder) der Matrix 512x512 erstellt.

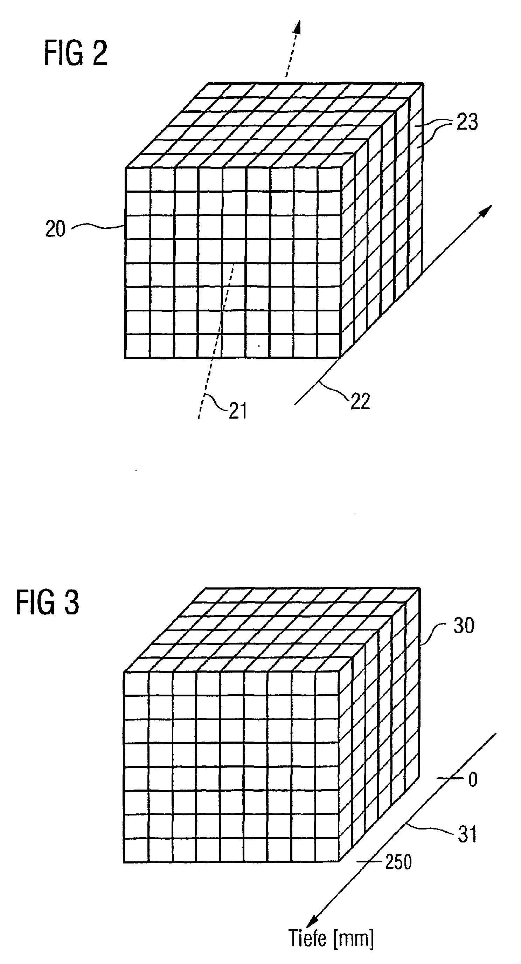

Der Volumendatensatz wird z.B. für die Anwendung in der minimal invasiven Chirurgie / Laparoskopie als zum Tisch 7 parallele Schichten interpretiert. Damit ist die Schichtorientierung (koronar) etwa rechtwinklig zur Blickrichtung eines in der Figur 1 nicht dargestellten Arztes, der in der Regel etwa senkrecht auf die Bauchdecke des Patienten 3 schaut. Diese Schichten werden im Falle des vorliegenden Ausführungsbeispiels als Texturen oder interpolierte Multitexturen interpretiert und nach dem Shear-Warp-Verfahren zu einer 3D-Darstellung verrechnet (bekannte Ausprägung des Volume Renderings). Der daraus entstehende Volumendatensatz 20 ist in der Figur 2 schematisch dargestellt. Ein in etwa von der Blickrichtung des Arztes ausgehender und in den Volumendatensatz 20 hineinlaufender virtueller Sehstrahl 21 ist in der Figur 2 strichliert gezeigt. Diejenige Koordinatenachse des ursprünglichen Volumendatensatzes, welche in der bevorzugten Betrachtungsrichtung des Bedieners den kleinsten Winkel zum Sehstrahl 21 hat, also am ehesten parallel zum Sehstrahl 21 in Vorzugsrichtung verläuft, wird als Hauptbetrachtungsrichtung 22 bezeichnet. Das beschriebene Verfahren funktioniert mit dieser einen Vorzugsrichtung für große Datensätze wie in diesem Beispiel relativ gut auch für Auslenkungen der Blickrichtung bis ca. +- 80° seitlich oder nach oben/unten. Für eine verbesserte Darstellung schaltet man bei +- 45° z.B. auf Schichten um, die zur ersten Orientierung senkrecht stehen (axial oder sagittal). Grundsätzlich werden die 3D-Daten im Falle des vorliegenden Ausführungsbeispiels für den Farb-Lookup-Modus einschließlich Schwarz-Weiß-Darstellung abgespeichert. Das bedeutet für relativ großen Datensätze einerseits minimalen Speicherbedarf (z.B. 8 Bit in 3D, nur für den Display z.B. 32 Bit), andererseits die Möglichkeit, dass die Darstellung durch Modifikation der Lookup-Tabelle in Echtzeit verändert bzw. angepasst werden kann.

Erfindungsgemäß ist nun eine Verbindung der Darstellungs-Steuerung über eine Lookup-Tabelle mit Schattierung und Tiefen-Information vorgesehen. Dazu wird im Falle des vorliegenden Ausführungsbeispiels ein weiterer, in der Figur 3 dargestellter Volumendatensatz 30 hergestellt, indem die Volumenelemente 23 des Volumendatensatzes 20 voxelweise mit einem Tiefenwert entlang der kantenparallelen Hauptbetrachtungsrichtung sowie möglicherweise weiteren Filterantworten moduliert und durch diese einmalige Vorverarbeitung codiert im Arbeitsspeicher der Grafikkarte 13 des Rechners 11 abgespeichert werden.

Die Modulierung der einzelnen Volumenelemente 23 des Volumendatensatzes 20 geschieht im Falle des vorliegenden Ausführungsbeispiels entlang der Hauptbetrachtungsrichtung 22, und zwar derart, dass die Grauwerte (bei CT z.B. Hounsfield-Einheiten) der Volumenelemente 23 des Volumendatensatzes 20, die weiter vom Blickpunkt eines Betrachters entlang Hauptbetrachtungsrichtung 22 entfernt sind, mit einem geringeren Faktor verrechnet werden als die Grauwerte der Volumenelemente 23, die sich näher am Betrachter befinden.

Der weitere Volumendatensatz 30 wird anschließend bei der Darstellung in Echtzeit mit einem gegenüber dem sonstigen Volume Rendering möglicherweise modifizierten Alpha-Wert verrechnet und unter Mitwirkung einer Lookup-Tabelle (Transfer Funktion) dargestellt.

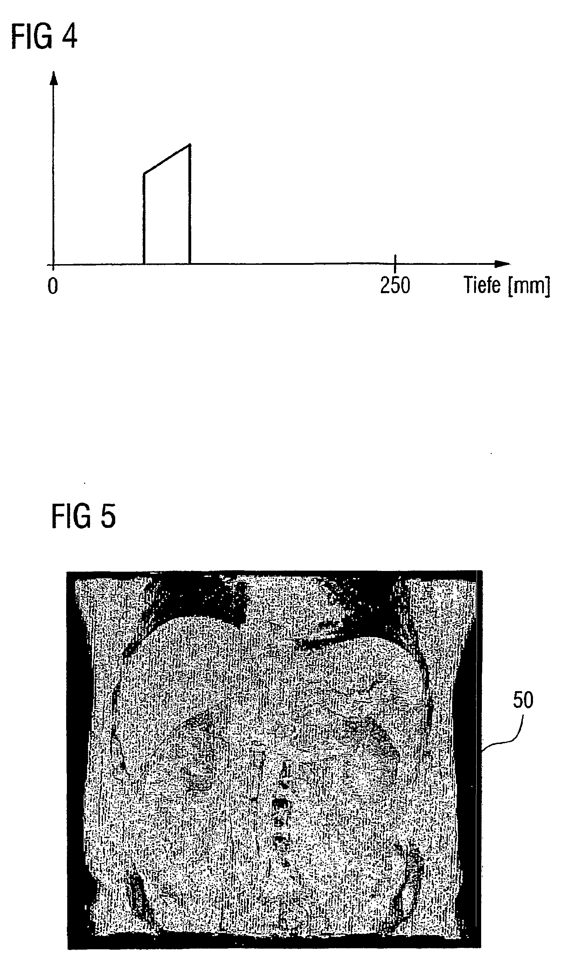

Die Transferfunktion hat im Falle des vorliegenden Ausführungsbeispiels die Form eines abgeschrägten Balkens 40, wie dies in der Figur 4 schematisch gezeigt ist. Die Codierung im Volumendatensatz 30 und der Ansatz der Transferfunktion erfolgt derart, dass der Verschiebebereich des abgeschrägten Balkens 40 der Tiefe des Volumendatensatzes 30 entspricht und damit der gesamte, bei 8 Bit z.B. 256 Elemente große Farb- bzw. Grauwertbereich der Volumenelemente des Datensatzes 30 abgebildet werden kann. Die Tiefe des weiteren Volumendatensatzes 30 ist mit einer Achse 31 dargestellt.

In der Echtzeit-Generierung der 3D-Ansicht wird jede der codierten Schichten (Texturen) des weiteren Volumendatensatzes 30 derart verzerrt, wie es der aktuellen perspektivischen Ansicht mit zentralem Sehstrahl 21 entspricht und dann letztlich nach Multiplikation mit dem genannten Blending-Alpha in einer Akkumulator-Textur aufaddiert. Dabei wird im Falle des vorliegenden Ausführungsbeispiels auch eine Echtzeit-Interpolation in der Graphikkarte 13 verwendet.

Der Akkumulator-Speicher, z.B. eine Display-Puffer, in der Grafikkarte 13 enthält mit der gesamten Codierung und Verrechnung ein schattiertes, ggf. kantenbetontes 3D-Bild, bei dem ein oder mehrere Tiefenbereiche des ursprünglichen, in der Figur 2 gezeigten Volumendatensatzes 20 dargestellt sind. Der Abgriff der gewünschten Tiefe erfolgt durch die entsprechende Einstellung der Lookup-Tabelle. Eine verfeinerte, auch nichtlineare Codierung kann vorgenommen werden, um z.B. nicht interessierende Strukturen wie z.B. in manchen Fällen Knochen (Rippen) noch deutlicher zu trennen oder wegzublenden. Eine solche Spezialcodierung sollte an den Gegebenheiten der Skala der Messwerte, im Falle des vorliegenden Ausführungsbeispiels der Hounsfield-Einheiten der einzelnen Volumenelemente des Volumendatensatzes 20 orientiert werden.

Die Werte der Lookup Tabelle (Transferfunktion) sehen beispielsweise so aus: Das abgeschrägte Rechteck erstreckt sich im Tiefenbereich von ca. 136 mm bis 120 mm entsprechend Positionen 136 bis 120 für die Lookup-Funktion. Bei reiner Grauwertcodierung steht in Position 136 der Display-Farbwert "255, 255, 255", abfallend bis z.B. auf Wert "50, 50, 50" in Position 120. Dies verstärkt die Tiefencodierung in Volumendatensatz 30, indem z.B. bei seitlicher Draufsicht auf eine Objektoberfläche weiter hinten liegende Oberflächenvolumenelemente in der Alpha-Aufintegration durchschnittlich dunkler gerendert werden als weiter vorne liegende Volumenelemente, und daraus ergibt sich der plastische bzw. der verstärkte räumliche Effekt.

Die gesamten Verrechnungen werden beispielsweise durch einen Schieberegler oder eine Mausbewegung angestoßen oder erfolgen kontinuierlich durch Updates der Positions- und Orientierungskoordinaten von einem in der Figur 1 nicht näher dargestellten, aber dem Fachmann allgemein bekannten Navigationssystem, so dass z.B. mit zur Zeit erhältlichen Standard-Grafikkarten ca. 15 Renderings pro Sekunde erreicht werden.

Ein mit dem erfindungsgemäßen Verfahren hergestellte Darstellung ist in der Figur 5 in Form eines Bildes 50 exemplarisch gezeigt.

Der Volumendatensatz 20 wird im Falle des vorliegenden Ausführungsbeispiels mit einem Computertomographen hergestellt und liegt in Form mehrerer aufeinanderfolgender computertomographischer Schnittbilder vor. Der Volumendatensatz 20 kann aber auch mit anderen bildgebenden Geräten, wie insbesondere mit einem Magnetresonanzgerät, einem Röntgengerät, einem Ultraschallgerät oder einem PET-Scanner hergestellt werden. Der Volumendatensatz 20 muss auch nicht in Form mehrerer aufeinanderfolgender computertomographischer Schnittbilder vorliegen.

Das erfindungsgemäße Verfahren kann auch für abgebildete technische Objekte verwendete werden.

Das Ausführungsbeispiel hat ebenfalls nur exemplarischen Charakter.

## Patentansprüche

1. Verfahren zur Darstellung eines in einem ersten Volumendatensatz (20) abgebildeten Objektes (3), aufweisend folgende Verfahrensschritte:
- Herstellen eines zweiten Volumendatensatzes (30), indem alle Volumenelemente (23) des ersten Volumendatensatzes (20) parallel zu einer in den ersten Volumendatensatz (20) hineinverlaufenden Hauptbetrachtungsrichtung (22) tiefenabhängig moduliert und/oder codiert werden, und
- Anwenden des Volume Renderings auf den zweiten Volumendatensatz.

2. Verfahren nach Anspruch 1, bei dem zur Ansteuerung der tiefenabhängigen 3D-Darstellung eine Transferfunktion verwendet wird.

3. Verfahren nach Anspruch 1 oder 2, bei dem die Transferfunktion für das Volume Rendering die Form eines abgeschrägten Balkens (40) hat.

4. Verfahren nach einem der Ansprüche 1 bis 3, bei dem die Transferfunktion in einer Lookup-Tabelle abgelegt ist.

5. Verfahren nach einem der Ansprüche 1 bis 4, bei dem das Volumen Rendering mit einem Navigationssystem gesteuert wird.

6. Verfahren nach einem der Ansprüche 1 bis 5, bei dem das Volumen Rendering mit einem Computer-Eingabegerät manuell gesteuert wird.

7. Verfahren nach einem der Ansprüche 1 bis 6, bei dem zusätzlich ein so genanntes "texture mapping" insbesondere nach dem Shear-Warp Verfahren und möglicherweise mit so genannten Multitexturen durchgeführt wird.

8. Verfahren nach Anspruch 7, bei dem das "texture mapping" mittels der Hardware einer Grafikkarte 13 durchgeführt wird.

9. Verfahren nach einem der Ansprüche 1 bis 8, bei dem Volumenelemente (23) des ersten und/oder zweiten Volumendatensatzes (20, 30) interpoliert werden.

10. Verfahren nach einem der Ansprüche 1 bis 9, bei dem der erste und/oder zweite Volumendatensatz (20, 30) gefiltert werden.

11. Verfahren nach Anspruch 10, bei dem das Ergebnis der Filterung des ersten und/oder das Ergebnis der Filterung des zweiten Volumendatensatzes (20, 30) zwischengespeichert werden.

12. Verfahren nach einem der Ansprüche 5 bis 11, bei dem vorab segmentierte Teilobjekte mit einem Farbwert abgespeichert werden, der einem speziellen reservierten Bereich der Lookup Tabelle entspricht, so dass sie mit einer eigenen Colorierung aus ihrer Umgebung aus anderen Objekten des beschriebenen Volumen-Renderns herausleuchten und **dadurch** mit dem Navigationssystem gezielt angesteuert werden können.

## Claims

1. Method for representation of a subject (3) imaged in a first volume data set (20), comprising the following method steps:
- generation of a second volume data set (30) in which all volume elements (23) of the first volume data set (20) are depth-dependently modulated and/or coded parallel to a main observation direction (22) running into the first volume data set (20),
- application of the volume rendering to the second volume data set.

2. Method according to claim 1, in which a transfer function is used for activation of the depth-dependent 3D representation.

3. Method according to claim 1 or 2, in which the transfer function for the volume rendering has the form of a canted bar (40).

4. Method according to one of the claims 1 to 3, in which the transfer function is stored in a lookup table.

5. Method according to one of the claims 1 to 4, in which the volume rendering is controlled with a navigation system.

6. Method according to one of the claims 1 to 5, in which the volume rendering is manually controlled with a computer input apparatus.

7. Method according to one of the claims 1 to 6, in which what is known as "texture mapping", in particular according to the shear warp method, is additionally implemented, and possibly with what are known as multi-textures.

8. Method according to claim 7, in which the "texture mapping" is implemented by means of the hardware of a graphic card 13.

9. Method according to one of the claims 1 to 8, in which volume elements (23) of the first and/or second volume data set (20, 30) are interpolated.

10. Method according to one of the claims 1 to 9, in which the first and/or second volume data set (20, 30) are filtered.

11. Method according to claim 10, in which the result of the filtering of the first volume data set and/or the result of the filtering of the second volume data set (20, 30) are buffered.

12. Method according to one of the claims 5 to 11, in which segmented partial subjects are stored beforehand with a colour value that corresponds to a specially reserved range of the lookup table, such that they can be illuminated with their own colouring relative to their surroundings, relative to other subjects of the described volume rendering, and can thereby be specifically addressed with the navigation system.

## Revendications

1. Procédé pour reproduire un objet (3) représenté dans un premier ensemble de données de volume (20), comportant les étapes suivantes :
- élaboration d'un deuxième ensemble de données de volume (30) en modulant et/ou codant en fonction de la profondeur tous les éléments de volume (23) du premier ensemble de données de volume (20) parallèlement à une direction d'observation principale (22) s'étendant vers l'intérieur du premier ensemble de données de volume (20), et
- application du rendu volumique au deuxième ensemble de données de volume.

2. Procédé selon la revendication 1, dans lequel on utilise une fonction de transfert pour la commande de la reproduction en 3D en fonction de la profondeur.

3. Procédé selon la revendication 1 ou 2, dans lequel la fonction de transfert pour le rendu volumique a la forme d'une barre biseautée (40).

4. Procédé selon l'une des revendications 1 à 3, dans lequel la fonction de transfert est enregistrée dans une table de conversion.

5. Procédé selon l'une des revendications 1 à 4, dans lequel le rendu volumique est commandé avec un système de navigation.

6. Procédé selon l'une des revendications 1 à 5, dans lequel le rendu volumique est commandé manuellement avec un appareil d'entrée d'ordinateur.

7. Procédé selon l'une des revendications 1 à 6, dans lequel on effectue en plus un "placage de texture", notamment selon le procédé Shear-Warp, et si possible avec des multitextures.

8. Procédé selon la revendication 7, dans lequel le "placage de textures" est effectué au moyen du matériel d'une carte graphique (13).

9. Procédé selon l'une des revendications 1 à 8, dans lequel des éléments de volume (23) du premier et/ou du deuxième ensemble de données de volume (20, 30) sont interpolés.

10. Procédé selon l'une des revendications 1 à 9, dans lequel le premier et/ou le deuxième ensemble de données de volume (20, 30) sont filtrés.

11. Procédé selon la revendication 10, dans lequel le résultat du filtrage du premier ensemble de données de volume (20) et/ou le résultat du filtrage du deuxième ensemble de données de volume (30) sont mémorisés temporairement.

12. Procédé selon l'une des revendications 5 à 11, dans lequel des parties d'objets préalablement segmentées sont mémorisées avec une valeur de couleur qui correspond à une zone réservée spéciale de la table de conversion de telle sorte qu'elles peuvent être éclairées avec une couleur particulière pour ressortir de leur environnement composé d'autres objets du rendu volumique décrit et qu'elles peuvent ainsi être commandées de manière ciblée avec le système de navigation.
